Europäisches Patentamt

European Patent Office

Office européen des brevets

(19)

(11) Publication number: **0 120 654**
**B1**

## (12) EUROPEAN PATENT SPECIFICATION

(45) Date of publication of patent specification: **08.06.88**

(21) Application number: **84301751.8**

(22) Date of filing: **14.03.84**

(51) Int. Cl.⁴: **F 03 D 7/04,** G 05 D 13/62, G 05 D 13/64

(54) **Power generating equipment.**

(30) Priority: **23.03.83 GB 8308018**
**30.03.83 GB 8308780**

(43) Date of publication of application:
**03.10.84 Bulletin 84/40**

(45) Publication of the grant of the patent:
**08.06.88 Bulletin 88/23**

(84) Designated Contracting States:
**BE CH DE FR IT LI NL SE**

(56) References cited:
EP-A-0 008 584
EP-A-0 058 037
US-A-4 112 311

4TH IECI ANNUAL CONFERENCE PROCEEDINGS, "INDUSTRIAL APPLICATIONS OF MICROPROCESSORS", Philadelphia, 20st-22nd March 1978, pages 143-149, IEEE, New York, USA A.J. GNECCO et al.: "Microprocessor control of a wind turbine generator"

(73) Proprietor: **THE ENGLISH ELECTRIC COMPANY LIMITED**
**1, Stanhope Gate**
**London W1A 1EH (GB)**

(72) Inventor: **Law, Hilton**
**21 Leicester Road**
**Quorn Leicestershire, LE12 8ES (GB)**

(74) Representative: **Kirby, Harold Victor Albert**
**Central Patent Department Wembley Office The General Electric Company, p.l.c. Hirst Research Centre East Lane**
**Wembley Middlesex HA9 7PP (GB)**

Courier Press, Leamington Spa, England.

EP 0 120 654 B1

# Description

This invention relates to power generating equipment of the kind in which the rotational speed or torque of a fluid-driven turbine driving an alternating current generator may vary widely and in a random manner due to fluctuations in the speed of the fluid driving the turbine. In order to feed this power into the National Grid or to parallel a number of generators on to a common bus, it is necessary to control the torque applied to the generator or generators in order to prevent undesirable power fluctuations and to prevent the generator or generators from being pulled out of step.

The invention is especially concerned with systems of the kind in which a generator is driven by a wind turbine, but may also include the use of wave or tidal power.

The mean speed of the wind at any particular place tends, in general, to vary relatively slowly, but gusting gives rise to a fluctuating component composed of shorter and randomly varying periods which is superimposed on the mean speed component. Whilst changes in the mean wind speed can usually be catered for by altering the pitch angle of at least part of the turbine blades, shorter duration variations, as are caused by gusting, can give rise to difficulties, in view of the time which it normally takes to alter the pitch angle as a result of the response of the system.

In order to reduce the effect of such fluctuations on the generator in systems as constructed hitherto a degree of angular displacement resilience, as provided for example by a quill shaft or a mechanical gear box having its casing mounted for limited rotational movement against springs with suitable damping, is commonly incorporated in the coupling between the turbine and generator shafts, but in general such systems can only cope satisfactorily with relatively short period wind gust peaks, for example of not more than 5 seconds duration, and it is therefore necessary to utilise the blade pitch control in order to deal with fluctuations of longer duration.

Accordingly it has been proposed to utilise, in place of the quill shaft or rotational mechanical gear box, a differential drive unit having its output shaft connected to the generator and one input coupled to the turbine, and to couple the other input to a variable speed reaction machine which controls the torque on the other input of the differential drive unit in a sense which tends to compensate for such speed variations and thereby reduce fluctuations of speed or torque on the generator over a limited range. Two such arrangements have been disclosed in US—A—4112311 and EP—A—58037.

In general, whilst such arrangement can provide a limited degree of control for short term fluctuations in the speed of the fluid driving the turbine, the speed of the fluid may vary relatively slowly over a wide range.

According to the present invention an alternating current electrical power generating system of the kind in which an electrical generator which is arranged to feed power into a grid system is driven by a turbine whose speed or torque may vary in response to changes in the speed of fluid driving the turbine, and in which the generator rotor is connected to the output shaft of a differential drive unit, one input of which is coupled to the turbine and the other input of which is coupled to a variable speed reaction machine which controls the other input of the differential drive unit in response to changes in turbine speed in the sense which tends to oppose such speed variations and thereby reduce fluctuations of torque on the generator over a limited range, such that as the speed of the turbine increases the reaction machine is caused to generate power which is fed into the grid, and as the speed of the turbine decreases the reaction machine to take power from the grid, characterised in that the variable speed reaction machine is controlled by control means responsive to changes in the turbine speed so as to maintain the torque on said other input at a substantially constant level in said range, and which includes means operative when the speed of the turbine changes by more than a predetermined amount, to adjust said torque level of the system so as to limit the maximum speed of the reaction machine.

Preferably the control means incorporates a computer programmed in a manner such that between two predetermined wind torque turbine speed characteristics, each varying in accordance with a relatively high value torque/speed constant, the torque changes according to a relatively low value torque/speed constant, whereas at speeds below and above that defined by the lower and higher respectively of the two characteristics the torque changes according to said high value torque/speed constant in a manner such as to oppose further changes and adjust to a new torque base.

Such a system can therefore be designed to compensate for cyclically varying speeds of the turbine over a wide range.

The system may include, in addition, means for adjusting the pitch of the turbine blades which causes the mean speed of the turbine to return to a value corresponding to synchronous speed of the generator. In the case of a wind driven turbine the control means include means for adjusting the pitch of the turbine blades when the mean wind speed acting on the turbine changes by an amount greater than that within the range of control.

It has also been found that when the said other input is coupled to a suitably controlled variable speed reaction machine, the inertia of the reaction machine tends to prevent adequate smoothing of high frequency fluctuations.

Preferably therefore the control means is arranged to introduce into said torque control a signal proportional to the reaction machine acceleration, with the sense and gain of this signal adjusted so that the resultant torque component provides a degree of damping which reduces the effect of an oscillatory response to wind changes.

When the turbine, such as for example a wind turbine, rotates at a speed corresponding to the synchronous speed of a synchronous generator the said other input is conveniently arranged to be stationary. A reduction or increase in the speed of the turbine will thus cause the other input to rotate in one or other direction so as to maintain the generator torque at a required value. However there are advantages for some systems in making the reaction machine stationary when the referred full load turbine speed is not equal to the synchronous speed. This is possible by suitable selection of gear ratios.

The variable speed reaction machine may, for example, be either an electric or a hydraulic motor.

The difference between the turbine speed and the referred generator speed is conveniently equal to the referred speed of the reaction machine shaft. That is, the speed of the reaction shaft is directly proportional to the deviation of turbine speed from a set speed, for example, synchronous speed where it is driving a synchronous generator. The control of torque as a function of difference speed is simple, convenient and rapid; considerable flexibility exists for the incorporation of non-linear or transient stability control laws if so required.

With such an arrangement, the rate of response of the reaction machine to rapidly varying turbine speeds is significantly increased and its smoothing capability thereby improved.

Reaction machine torque, and therefore both the generator and turbine shaft torques, are effectively controlled from a function of reaction machine speed.

The average torque level can be set by a low gain integral control loop which tends to reduce reaction machine torque when the speed of the latter increases due to falling turbine speed. Thus, reaction machine torque and therefore that applied to the generator shaft tends to follow long term changes in turbine torque. For stability purposes a damping or droop torque control loop may also be provided.

Several different embodiments of the invention will now be described by way of example with reference to Figures 1 to 6 of the accompanying schematic drawings in which:

Figures 1—4 illustrate in diagrammatic form four different forms of power generating systems in accordance with the invention, and

Figure 5 shows the application of a computer to a generator system to achieve a form of control characteristics as illustrated in Figure 6.

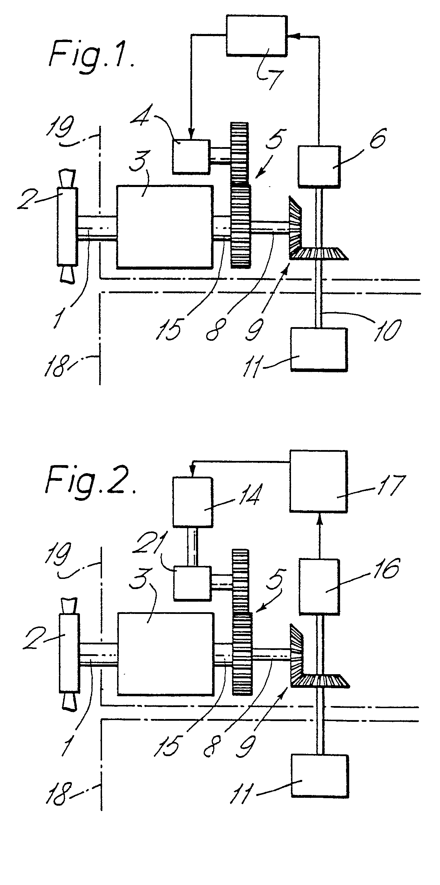

Referring first to Figure 1, the shaft 1 of a wind driven turbine 2 provides the input to the ring gear of an epicyclic gear box 3. A hydraulic reaction motor 4 is coupled through gears 5 to a shaft 15 which is connected to the carrier of the epicyclic gear box 3, the motor 4 being arranged to be driven, in use of the system, by a pump 6 through a hydraulic controller 7. The sun gear of the gear box 3 is connected to an output shaft 8 which is coupled, through bevel gears 9, to the shaft 10 of an electrical synchronous generator 11, the shaft 10 also providing the drive for the pump 6.

Control of the torque of the reaction shaft 15 of the differential gear box 3 via the hydraulic controller 7 and motor 4 controls directly both the load torque on the wind turbine 2, and also the torque on the synchronous generator 11. In addition the difference between the turbine shaft speed and the referred generator speed, that is to say the speed of the output shaft 8 of the gear box 3 is equal to the speed of the reaction shaft 15. In other words the speed of the reaction shaft is directly proportional to the deviation of the turbine 2 from synchronous speed.

In operation, therefore, when the wind turbine is rotating at a speed corresponding to synchronous speed the reaction motor 4 will be stationary. However when the turbine speed reduces below the synchronous speed due to a drop in wind speed the reaction motor will start rotating in the motoring direction, taking power from the supply, causing the tubine load torque to decrease thereby compensating for the reduced wind speed and, within its range of control, maintaining the generator torque substantially constant. Similarly when an increase in wind speed causes the turbine to accelerate, the reaction motor will operate as a generator feeding power back into the supply, resulting in an increase in load torque, and again serving to maintain the generator torque substantially constant.

An arrangement as above described can be constructed to operate over a wide range of wind speed variations. However the mean wind speed can nevertheless vary, usually over a relatively long period to an extent such that a limit position is reached at which the system, by itself, can no longer provide adequate control of the generator torque. Means (not shown in Figure 1) are therefore provided for automatically adjusting the pitch of the tips of the turbine blades, in a manner causing the mean speed of the turbine to return towards a value corresponding to the synchronous speed of the generator, the control system then operating, as before, to maintain the generator torque substantially constant despite variations of wind speed from its new mean value within its operating range.

The blade pitch control is conveniently actuated in response to a signal proportional to a predetermined change of turbine speed from synchronous speed as measured by reaction motor speed.

Figure 2 illustrates a system generally similar to that of Figure 1 except that the hydraulic reaction motor 4 and controller 7 are replaced by an electric reaction machine 14 and a variable speed controller 17, and the pump 6 is replaced by an auxiliary electrical generator 16 feeding the controller 17. An auxiliary gear box 21 is also interposed between the machine 14 and the gears 5 as shown.

This system operates in the same manner as that of Figure 1 to maintain a substantially constant generator torque despite cyclic fluctuations in wind speed.

In both of the systems above described the main generator 11 is housed within the body 18 of a tower with its rotor axis vertical and coincident with the axis of rotation of a nacelle 19 accommodating the gear box 3 and the hydraulic motor or electric reaction machine and the controls therefore. Such an arrangement permits the nacelle 19 to rotate about a vertical axis in dependence upon the wind direction, without the need to rotate the generator stator. However it will be appreciated that the generator could alternatively be mounted in the nacelle.

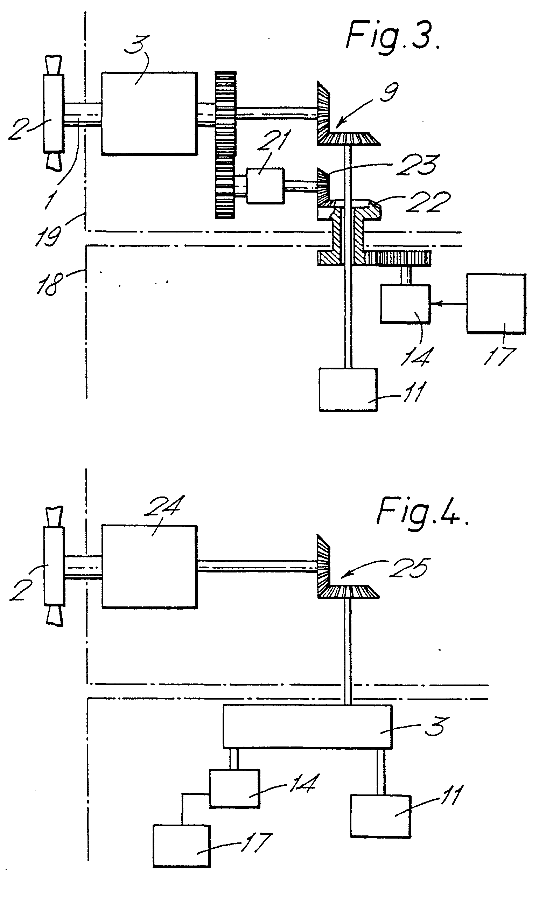

An alternative to the arrangement illustrated in Figure 2 is shown in Figure 3. This system operates in the same manner as that of Figure 2 but, instead of being mounted in the nacelle 19, the electric reaction machine 14 is also located in the part 18 of the tower which houses the main generator 11, and is connected to the auxiliary gear box 21 by idler and bevel gears 22, 23, the idler gear 22 being supported for rotation coaxially around the main generator shaft 10. The advantage of this arrangement is that the auxiliary generator 16 is not required and the variable speed controller can also be located in the main part 18 of the tower (as shown) or even in a position remote from the wind generator installation. This leads to simplicity and ease of access to the controller where the generator installation itself is not conveniently situated.

A further alternative is illustrated in Figure 4 which shows diagrammatically the epicyclic gear box 3, as well as the main generator 11 and reaction machine 14 located in the main part 18 of the wind tower, the wind turbine 2 being coupled to the epicyclic gear box through a primary step-up gear box 24 and bevel gears 25.

A computer (not shown in Figure 4) is conveniently provided to ensure that feed back to effect the control of the reaction motor is such as to achieve the most satisfactory operating conditions for any particular application of the invention.

In a modification of the arrangement of Figure 4 the electrical reaction machine 14 is replaced by a hydraulic reaction motor as in the arrangement of Figure 1.

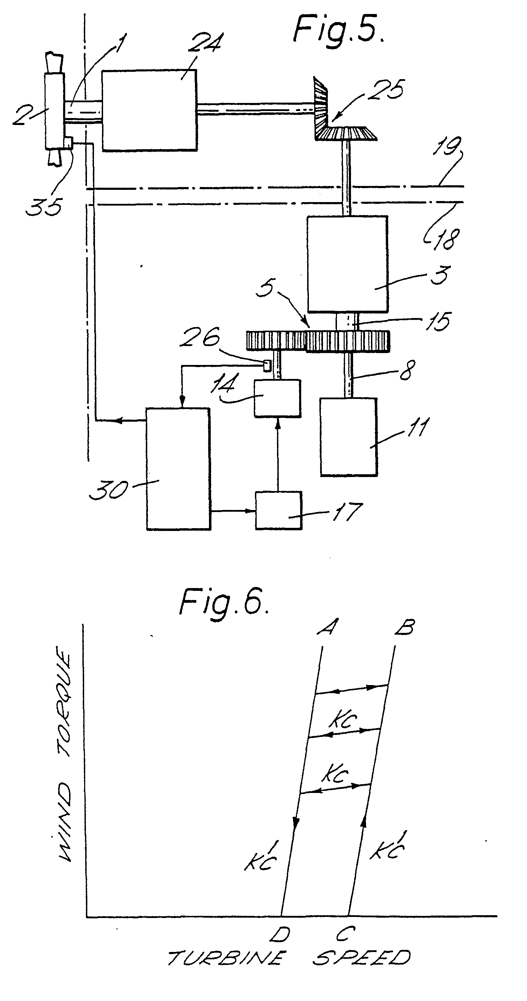

The embodiment illustrated in Figure 5 is generally similar to that of Figure 4, and reaction machine torque, and therefore both the generator and wind turbine shaft torques are controlled by a function of the reaction machine speed, by means of a sensor 26 which monitors the speed of the reaction machine, and feeds signals to a control computer 30 which controls, in turn, the machine torque via the speed controller 17.

In this system an algorithm is built into the control computer 30 such that the torque control law of the reaction machine 14 is as shown in Figure 6. Thus when the speed of the turbine 2 is within the range defined by characteristics DA and CB, a change in turbine speed (i.e. as measured by changes in reaction machine speed) causes the torque to change according to a low value torque/speed constant as represented by $K_c$. If at a given moment the operating point of the turbine speed in terms of speed and torque as situated somewhere on the characteristic DA, an increase in speed causes the torque to increase according to the low value torque/speed constant as before, but a decrease in speed causes the torque to decrease according to a high value torque/speed constant $K'_c$. Similarly, when said operating point of the turbine 2 is situated on the characteristic CB, the torque for a reduction in speed follows the low gain characteristic $K_c$ and for an increase in speed the high gain characteristic $K'_c$. Such an arrangement functions to limit the maximum speed of the reaction machine and enables the generator to follow long term changes in wind speed above described.

This is achieved by the appropriate selection of feed-back signals, and enables it to maintain an adequate follow up of long term wind velocity changes.

Thus the action of the control algorithm is to regulate the rection machine torque so that this matches the turbine torque level derived from the wind, by keeping the reaction machine speed within its operating range (typically ±5% referred to the generator).

In operation, as an example, assume the wind turbine is at full load at synchronous speed, and the reaction machine is stationary, with load torque and wind turbine torque in balance. A decrease in wind speed will provide deceleration torque and the wind turbine speed will start to decrease, causing also the reaction machine to start rotating (motoring). Reaction machine and thus generator torque will only reduce slightly at first (the reduction would be zero if $K_c$ were made to be zero) but if the change in wind speed persists the reaction machine speed will eventually reach −5% referred to the generator. Further change in turbine and thus reaction machine speed causes the reaction machine torque to reduce rapidly according to gain $K'_c$. This will tend to oppose further speed reduction. At this point a small increase in wind speed will cause the turbine to start accelerating and the reaction machine to reduce speed. The control algorithm is so arranged that the torque control does *not* follow back up the $K_c'$ slope but immediately follows the low gain $K_c$ slope. Thus a new mean torque level is set consistent with the new wind speed level.

For small cyclic variations of wind speed causing turbine speed variation of less than ±5% the system reaches the amplitude of these torque variations at the generator. However the system enables the generator torque to follow long term changes in wind speed when the turbine speed varies by more than ±5% from the generator speed.

Means (shown diagrammatically at 35) are provided for effecting the adjustment of the pitch of the turbine blades, as appropriate.

There is also conveniently introduced into the torque control system a negative feed forward signal proportional to reaction machine acceleration, the gain of this signal being adjusted so that the resultant torque component compensates partly or fully for that required to accelerate the reaction machine.

Such an arrangement has been found to compensate at least partly for the inertia of the electric reaction machine giving an improved response to rapid wind velocity fluctuations.

The arrangement conveniently includes means (not shown) for actuating the blade pitch control system to feather the blades, as well as brakes, to prevent damage to the system in the event of any excessive disturbances.

A similar form of control system can be applied to the system previously described.

Although the invention has been described with reference to synchronous generators, induction generators may, of course, be used as an alternative if desired.

**Claims**

1. An alternating current electrical power generating system of the kind in which an electrical generator (11), which is arranged to feed power into a grid system, is driven by a turbine (2) whose speed or torque may vary in response to changes in the speed of fluid driving the turbine, and in which the generator rotor (10) is connected to the output shaft (8) of a differential drive unit (3), one input of which is coupled to the turbine (2) and the other input of which is coupled to a variable speed reaction machine which controls the other input of the differential drive unit (3) in response to changes in turbine speed in the sense which tends to oppose such speed variations and thereby reduce fluctuations of torque on the generator (11) over a limited range, such that as the speed of the turbine increases the reaction machine is caused to generate power which is fed into the grid, and as the speed of the turbine decreases the reaction machine to take power from the grid, characterised in that the variable speed reaction machine is controlled by control means responsive to changes in the turbine speed so as to maintain the torque on said other input at a substantially constant level in said range, and which includes means operative when the speed of the turbine changes by more than a predetermined amount, to adjust said torque level of the system so as to limit the maximum speed of the reaction machine.

2. A system according to Claim 1 characterised in that said control means incorporates a computer programmed in a manner such that between two predetermined wind torque/turbine speed characteristics, each varying in accordance with a relatively high value torque/speed constant, the torque changes according to a relatively low value torque/speed constant, whereas at speeds below and above that defined by the lower and higher respectively of the two characteristics the torque changes according to said high value torque/speed constant in a manner such as to oppose further changes and adjust to a new torque level.

3. A system according to Claim 2 further comprising means for adjusting the pitch of the turbine blades which causes the mean speed of the turbine to return to a value corresponding to synchronous speed of the generator.

4. A system according to Claim 3 in which the turbine is a wind driven turbine, characterised in that the control means includes means for adjusting the pitch of the turbine blades when the mean wind speed acting on the turbine changes by an amount greater than that within the range of control.

5. A system according to Claim 1 characterized in that the control means is arranged to introduce in to said torque control a signal proportional to the reaction machine acceleration, with the sense and gain of this signal adjusted so that the resultant torque component provides a degree of damping which reduces the effect of an oscillatory response to wind changes.

**Patentansprüche**

1. Wechselstomerzeugungssystem mit einem elektrischen Generator (11) zur Einspeisung von Leistung in ein Netz, der durch eine Turbine (2) angetrieben wird, deren Drehzahl oder Drehmoment von der Geschwindigkeit des die Turbine antreibenden Fluids abhängig ist, wobei der Rotor (10) des Generators mit der Ausgangswelle (8) einer Differentialantriebseinheit (3) verbunden ist, deren einer Eingang mit der Turbine (2) und deren anderer Eingang mit einer drehzahlvariablen Reaktionsmaschine verbunden ist, die den anderen Eingang der Differentialantriebseinheit (3) in Abhängigkeit von der Turbinendrehzahl in der Weise steuert, daß sie Änderungen der Drehzahl entgegenwirkt und dadurch Schwankungen des Drehmoments des Generators (11) in einem begrenzten Bereich verringert, so daß bei steigender Drehzahl der Turbine die Reaktionsmaschine zur Abgabe von Leistung an das Netz und bei abnehmender Turbinendrehzahl zur Aufnahme von Leistung aus dem Netz veranlaßt wird, dadurch gekennzeichnet, daß die drehzahlvariable Reaktionsmaschine durch Steuermittel in Abhängigkeit von der Turbinendrehzahl so gesteuert wird, daß das Drehmoment an dem erwähnten anderen Eingang einen weitgehend konstanten Wert in dem erwähnten Bereich beibehält, und das Steuermittel enthält, die bewirken, daß, wenn die Turbinendrehzahl sich um mehr als einen vorbestimmten Wert ändert, der erwähnte Wert des Drehmoments des Systems so eingestellt wird, daß die maximale Drehzahl der Reaktionsmaschine begrenzt wird.

2. System nach Anspruch 1, dadurch gekennzeichnet, daß das erwähnte Steuermittel einen Rechner aufweist, der so programmiert ist, daß sich das Drehmoment zwischen zwei vorbestimmten Winddrehmoment/Turbinendrehzahl-Kennlinien, die sich jeweils in Übereinstimmung mit einer verhältnismäßig hohen Drehmoment/ Drehzahl-Konstanten ändern, entsprechend einer verhältnismäßig niedrigen Drehmoment/Drehzahl-Konstanten ändert, dagegen bei unterhalb und oberhalb der jeweils durch die niedrigere und höhere der beiden Kennlinien definierten Drehzahl liegenden Drehzahlen das Drehmoment sich entsprechend der erwähnten höheren Drehmoment/Drehzahl-Konstanten in der Weise ändert, daß es weiteren Änderungen entgegenwirkt und ein neuer Wert des Drehmoments eingestellt wird.

3. System nach Anspruch 2 mit Mitteln zum Einstellen des Anstellwinkels der Turbinenschaufeln, so daß die mittlere Turbinendrehzahl zu einem Wert zurückkehrt, der der Synchrondrehzahl des Generators entspricht.

4. System nach Anspruch 3, bei dem die Turbine eine windgetriebene Turbine ist, dadurch gekennzeichnet, daß das Steuermittel ein Mittel aufweist, durch das der Anstellwinkel der Turbinenschaufeln eingestellt wird, wenn die mittlere Geschwindigkeit des Windes, der auf die Turbine einwirkt, sich um einen Betrag ändert, der größer als der in dem Bereich der Steuerung liegende ist.

5. System nach Anspruch 1, dadurch gekennzeichnet, daß das Steuermittel so ausgebildet ist, daß es in die erwähnte Drehmomentsteuerung ein Signal einführt, das der Beschleunigung der Reaktionsmaschine proportional ist, und zwar mit einem Wirkungssinn und einer Verstärkung dieses Signals, die so eingestellt ist, daß die resultierende Drehmomentkomponente eine derartige Dämpfung bewirkt, daß der Einfluß einer Oszillatorischen Antwort auf Windänderungen vermindert wird.

**Revendications**

1. Système générateur d'énergie électrique en courant alternatif, du type dans lequel une génératrice électrique (11), destinée à transmettre de l'énergie à un système en réseau, est entraînée par une turbine (2) dont la vitesse ou le couple peut varier à la suite des variations de vitesse du fluide entraînant la turbine, et dans lequel le rotor (10) de la génératrice est raccordé à l'arbre de sortie (8) d'un ensemble (3) d'entraînement différentiel dont une première entrée est couplée à la turbine (2) et l'autre entrée est couplée à une machine de réaction à vitesse variable qui commande l'autre entrée de l'ensemble (3) d'entraînement différentiel en fonction des variations de la vitesse de la turbine dans le sens qui a tendance à s'opposer à ces variations de vitesse et ainsi à réduire les fluctuations du couple appliqué à la génératrice (11) sur une plage limitée, d'une manière telle que, lorsque la vitesse de la turbine augmente, la machine de réaction crée de l'énergie qui est transmise au réseau et, lorsque la vitesse de la turbine diminue, la machine de réaction prélève de l'énergie du réseau, caractérisé en ce que la machine de réaction à vitesse variable est commandée par un dispositif de commande sensible aux variations de la vitesse de la turbine afin que le couple appliqué à l'autre entrée soit maintenu à un niveau sensiblement constant dans ladite plage, et il comporte un dispositif qui fonctionne lorsque la vitesse de la turbine change de plus d'une quantité prédéterminée et règle le niveau du couple du système afin que la vitesse maximale de la machine de réaction soit limitée.

2. Système selon la revendication 1, caractérisé en ce que le dispositif de commande comporte un ordinateur programmé d'une manière telle que, entre deux caractéristiques prédéterminées couple/vitesse de turbine, variant chacune avec une constante couple/vitesse de valeur relativement élevée, le couple varie avec une constante couple/vitesse de valeur relativement faible, alors que, aux vitesses inférieures et supérieures à celles qui sont délimitées par les caractéristiques inférieure et supérieure respectivement, le couple varie avec la constante couple/vitesse de valeur élevée , d'une manière telle qu'il s'oppose à des variations supplémentaires et assure le réglage à un nouveau niveau de couple.

3. Système selon la revendication 2, comprenant en outre un dispositif de réglage du pas des pales de la turbine provoquant le retour de la vitesse moyenne de la turbine à une valeur correspondant à la vitesse synchone de la génératrice.

4. Système selon la revendication 3, dans lequel la turbine est une turbine d'éolienne, caractérisé en ce que le dispositif de commande comporte un dispositif de réglage du pas des pales de la turbine lorsque la vitesse moyenne du vent agissant sur la turbine varie d'une quantité supérieure à celle qui se trouve dans la plage de réglage.

5. Système selon la revendication 1, caractérisé en ce que le dispositif de commande est destiné à introduire, dans le réglage du couple, un signal proportionnel à l'accélération de la machine de réaction, le sens et le gain de ce signal étant réglés de manière que la composante résultante du couple donne un degré d'amortissement qui réduit l'effet d'une réponse oscillatoire aux variations du vent.

Fig.1.

Fig.2.

1

*Fig.3.*

*Fig.4.*

## Fig.5.

## Fig.6.